# EUROPEAN PATENT SPECIFICATION

(11) **EP 0 949 031 B1**
(45) Date of publication and mention of the grant of the patent: **26.01.2005**
(21) Application number: 99850041.7
(22) Date of filing: 19.03.1999
(51) Int. Cl.: B23D 43/04

(54) **Tool for chip removing machining**
Werkzeug zur spanabhebenden Bearbeitung
Outil à enlèvement de copeaux

(30) Priority: 07.04.1998 SE 9801211
(43) Date of publication of application: 13.10.1999
(73) Proprietor: SECO TOOLS AB, S-737 82 Fagersta (SE)
(72) Inventor: Riviére, Bertrand, 18000 Bourges (FR)
(74) Representative: Taquist, Lennart

(56) References cited:
- WO-A-96/17706
- DE-A- 3 212 251
- GB-A- 842 250

## Description

### The field of the invention

The present invention relates to a reamer for chip removing machining according to the preamble of the independent claim.

### Prior art

In GB-B-2,044,150 is described a prior art reamer intended to ream slots and the like openings in metallic work-pieces. The known reamer brings about a number of relative advantages for example as regards the life span of the tool. The known reamer comprises a number of cutting units that are influenced by a common fastening device. During exchange of a cutting unit the positions of all units are influenced. Furthermore, many operations are required in order to change one cutting unit. DE 3212251 A, on which the preamble of claim 1 is based, shows a clamping device in a reamer to facilitate the removal and insertion of cutting units without removing clamping parts. A clamping element can be wedged against the cutting unit for clamping the same.

### Objects of the invention

One object of the present invention is to provide a reamer having the advantages of prior art.

Another object of the present invention is to provide a reamer with simply interchangeable cutting inserts.

Another object of the present invention is to provide a reamer with quickly interchangeable cutting insert.

Another object of the present invention is to provide a rigid reamer for narrow cutting inserts.

Still another object of the present invention is to provide a reamer where the clamping force on the cutting insert is distributed on a large surface such that the cutting insert does not endanger splitting.

Still another object of the present invention is to provide a reamer where torsion of the cutting insert during machining is avoided.

Still another object of the present invention is to provide a reamer with great resistance against extraction of the cutting insert from the holder.

Still another object of the present invention is to provide a reamer where the cutting insert more easily is guided into the cutting insert pocket during mounting.

These and other objects have been achieved by a reamer such as defined in the subsequent claims with reference to the drawings.

### Description of the drawings

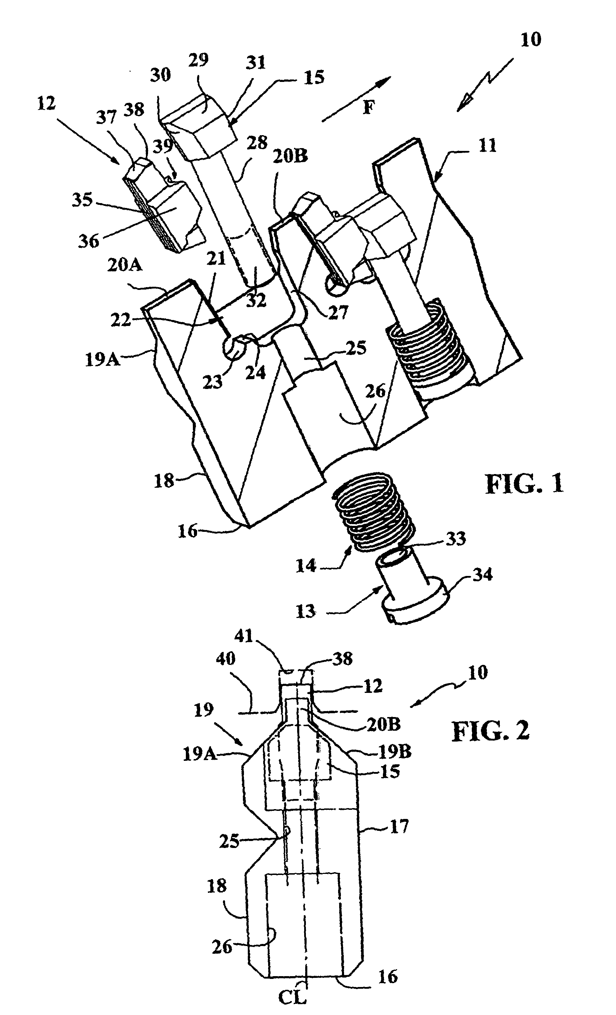

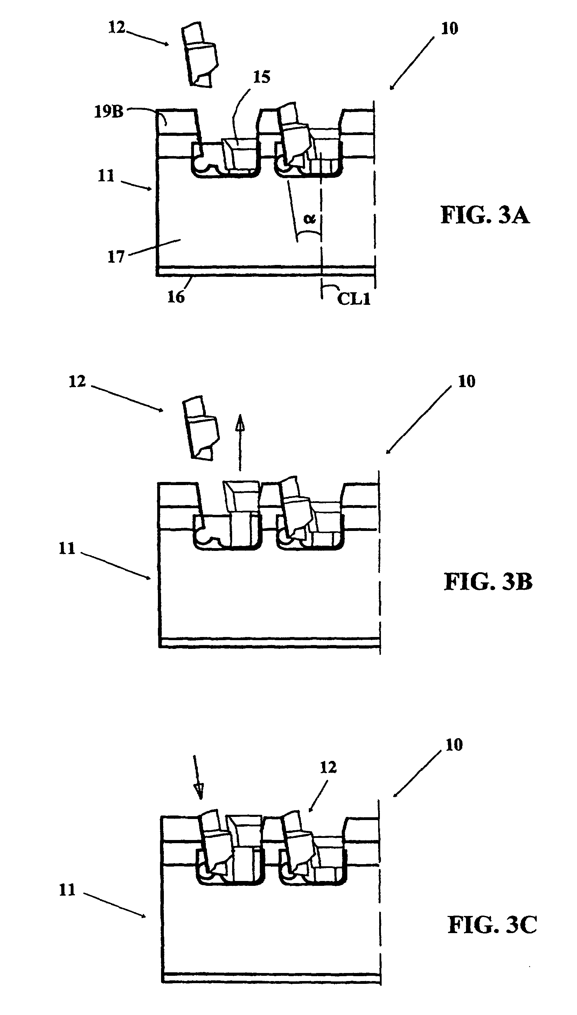

Fig. 1 shows a longitudinal section of a part of a reamer according to the present invention in an exploded perspective view. Fig. 2 shows the reamer in an end view. Figs. 3A-3C show a part of the reamer during mounting of a cutting insert.

### Detailed description of the invention

With reference to Figs. 1 and 2 a reamer 10 is shown, including an elongated the holder 11 or an elongated segment and a number of cutting inserts 12. The number of cutting inserts 12 is preferably more than 20 pieces and they are provided substantially along a line with successively increasing projections. The holder 11 comprises a number of insert pockets. The holder 11 is further provided with a number of clamping means, each including a nut 13, a spring 14 and a clamp 15. The reamer has a feed direction F relative to a work piece 40.

It is apparent from Fig. 2 that the holder has a substantially rectangular basic shape including a base 16, parallel side faces 17 and 18 as well as an upper side 19. One of the side faces 18 comprises a longitudinal V-shaped groove for clamping. The upper side 19 comprises surfaces 19a and 19b which are substantially perpendicular to each other and which connect to a center first support portion 20a symmetrically about the vertical axis CL of the segment. The support portion 20a has a forward portion in the feed direction, which constitutes a support surface 21 in a cutting insert pocket 22. The cutting insert pocket 22 opens outwardly towards the side surface 17 for reasons of accessibility. The support surface 21 is provided with a number of identical grooves, which are spaced from each other and which in cross section describes a substantially trapezoidal path. The grooves are elongated and extend along the entire support surface 21. The number of grooves depends of the width of the support surface 21 perpendicularly to the feed direction, and the number of grooves are chosen in the interval of 2 to 10 pieces. The support surface 21 connects via a concave surface 23 to an inner surface 24. The inner surface 24 is provided to determine the projection of the cutting insert. A transversal hole 25 is provided in front of the inner surface 24 in the feed direction and below the inner surface 24, which hole connects to a widened space 26 which exits in the base 16. A planar wall 27 is provided before and substantially above the transverse hole 25. The wall 27 connects to a second support portion 20b.

The clamp 15 comprises an elongated, cylindrical shank 28, which connects to a head 29. The head 29 is wedge-shaped as seen in the side views of Figs. 3A-3C and comprises a V-shaped, convex clamping surface 30 and a planar wall 31. The shank has a threaded end 32. The nut 13 has a cylindrical basic shape with an internal threaded hole 33. The nut 13 also comprises a flange portion 34 that defines the greatest diameter of the nut. The latter diameter is greater than the diameter of the spring 14. The inner diameter of the spring is however greater than the diameter of the rest of the nut. A key grip extends diametrically over the flange portion 34.

The cutting insert 12 has an elongated basic shape and comprises a upper surface 39, a lower surface 35 and side surfaces 36, 37, connecting them, wherein a line of intersection between the edge surface 37 and upper the surface forms a cutting edge 38. The cutting insert can alternatively be indexable, that is it can have two cutting edges; one edge at each end. The upper surface 39 comprise a V-shaped, concave portion. The lower surface 35 is formed with a number of from each other separate, substantially, identical ridges. The ridges follow a substantially sinusoidal path in cross section. The ridges are elongated and extend along the entire lower surface 35. Each ridge further has two flanks, which touch and connect to a bottom. A radius of about 0.2 to 0.4 mm describes the bottom. The flanks form an acute angle with each other. The number of ridges depends of the cutting insert width in the direction of the insert edge and is chosen to the same number as the number of grooves in the support surface 21, namely from 2 to 10.

Regarding the effect of grooves and ridges reference is made to WO 96/17706 A.

When mounting the reamer 10 according to the present invention the clamping means is mounted first, Fig. 1. Inserting the shank 28 with the threaded end surface 32 into the hole 25 until the head 29 rests against the holder does this. The surfaces 31 and 27 shall thereby be facing each other. Subsequently, the spring 14 is brought over the nut such that one end of the spring rests against the flange portion 34. The nut and the spring are then brought into the space 26 and the screw is firmly threaded onto the shank 28 by means of a screwdriver, for example. The method, which preferably is a once-only event, is repeated for the remaining clamping means. The support surface 21 forms an acute angle α, of less than 10°, with the center axis CL1 of the clamping means. The center axis CL1 of the clamping means preferably coincides with the vertical axis CL of the holder. Also the clamping surface 30 forms an acute angle with the center axis CL1 of the clamping means, Figs. 3A-3C. The latter angle is however greater than the angle α in order to attain highly positioned abutment areas between the clamp and the cutting insert. Subsequently, the nut is pushed into the space 26, whereby the motion of the clamp 15 expands the accessible space for the cutting insert.

The cutting insert 15 is aligned with the holder and is inserted such that the associated ridges and grooves come in engagement with each other. Then the cutting insert is further inserted, which insertion is guided by said engagement while the cutting insert is held by hand against the support surface 21, until the inner edge surface of the cutting insert abuts against the inner surface 24. Then the engagement with the screw 13 can be deactivated such that the flanks of the clamping surface 30 abut against the associated flanks of the concave portion of the upper surface 39 of the cutting insert whiie the walls 27, 31 bear against each other, such that the ridges are firmly pressed against the grooves. Thus, the head 29 of the clamp 15 is firmly wedged between the wall 27 and the cutting insert. The spring 14 is provided between the flange portion 34 and and the hole 26 to axially, with respect to the center axis CL1, urge the head into abutment with the cutting insert. The clamp 15 has an operative position shown to the right in Figs. 3A to 3C and an inoperative position as shown to the left in Figs. 3B and 3C. The remaining cutting inserts are firmly clamped in the same manner. Since the insert pockets 22 are somewhat displaced, about 0.1 mm, in the height direction perpendicularly to the feed direction each cutting insert successively comes into engagement with the work piece 40, such that a groove 41 can be formed in the work piece during broaching. The procedure is reversed at loosening of the cutting inserts.

The present invention thus relates to a reamer for chip removing machining, whereby the cutting inserts quickly and simply can be changed and which has good stability. The design of the reamer makes that the clamping force on the cutting insert is distributed over a relatively large surface such that the cutting insert does not risk splitting. In addition the grooves and the ridges bring about that the cutting insert has a resistance against extraction from the cutting insert pocket of about 3,5 times greater than cutting insert of a conventional embodiment.

## Claims

1. A reamer for chip removing machining of metals, including an elongated holder (11) and a number of cutting units, said holder comprising a number of pockets (22), said cutting units being provided substantially along a line with successive, increasing projections from the holder, said reamer (10) having a feed direction (F), said reamer (10) comprising clamping means for each cutting unit,
**characterized in that** each cutting unit comprises a replaceable cutting insert (12) and **in that** a spring-loaded clamp (15) is provided to wedge the cutting insert against a support surface (21) of the pocket (22) by means of a spring (14) and **in that** the clamp (15) comprises an elongated shank (28), which is connected to a wedge-shaped head (29), said shank extending through a hole (25,26) in the holder (11), an end (13) of said clamp (15) facing away from the head (29) being pushable to release the cutting insert (12).

2. The reamer according to claim 1, wherein a lower side (35) of the cutting insert (12) and the support surface (21) comprise complementary, profiled surfaces.

3. The reamer according to claim 1 or 2, wherein the head (29) is provided to be firmly wedged between the cutting insert (12) and a wall (27) of the cutting insert pocket.

4. The reamer according to claim 1, 2 or 3, wherein the support surface (21) forms an acute angle (α) with a center axis (CL1) of the clamping means and wherein a clamping surface (30) of the head (29) forms an acute angle with the center axis (CL1 ) of the clamping means.

5. The reamer according to anyone of the claims 1-4, wherein an upper surface (39) of the cutting insert (12) comprises a V-shaped, concave portion and wherein a lower surface (35) of the cutting insert is provided with a number of from each other separate, substantially identical ridges.

6. The reamer according to claim 3, wherein the head (29) comprises a V-shaped, convex clamping surface (30) and a planar wall (31), said clamping surface (30) being provided to cooperate with a V-shaped, concave portion of an upper surface (39) of the cutting insert (12).

7. The reamer according to anyone of the claims 1-4, wherein the shank has a threaded end (32) and wherein a nut (13) including a flange portion (34) is connected to the threaded end surface (32) and wherein the spring (14) encloses the shank and is provided in between said flange portion (34) and the hole (26) to axially urge said head into abutment with the cutting insert.

## Patentansprüche

1. Ahle für die spanabhebende Bearbeitung von Metallen, mit einem länglichen Halter (11) und einer Anzahl von Schneideinheiten, wobei der Halter eine Anzahl von Taschen (22) aufweist, die Schneideinheiten im wesentlichen entlang einer Linie mit aufeinanderfolgenden, größer werdenden Vorsprüngen von dem Halter versehen sind und die Ahle (10) eine Beschickungsrichtung (F) hat sowie Klemmittel für jede Schneideinheit aufweist, **dadurch gekennzeichnet, daß** jede Schneideinheit einen austauschbaren Schneideinsatz (12) aufweist, daß eine federbelastete Klemmeinrichtung (15) vorgesehen ist, um den Schneideinsatz gegen eine Stützfläche (21) der Tasche (22) mittels einer Feder (14) festzukeilen, und daß die Klemmeinrichtung (15) einen länglichen Schaft (28) aufweist, der mit einem keilförmigen Kopf (29) verbunden ist und sich durch ein Loch (25, 26) in dem Halter (11) erstreckt, wobei ein Ende (13) der Klemmeinrichtung von dem Kopf (29) fort gerichtet ist, der gestoßen werden kann, um den Schneideinsatz (12) zu lösen.

2. Ahle nach Anspruch 1, wobei eine untere Seite (35) des Schneideinsatzes (12) und die Stützfläche (21) komplementäre, profilierte Oberflächen aufweisen.

3. Ahle nach Anspruch 1 oder 2, wobei der Kopf (29) vorgesehen ist, um zwischen dem Schneideinsatz (12) und einer Wand (27) der Schneideinsatztasche festgekeilt zu werden.

4. Ahle nach Anspruch 1, 2 oder 3, wobei die Stützfläche (21) mit einer Mittelachse (CL1) des Klemmittels einen spitzen Winkel (α) bildet und eine Klemmfläche (30) des Kopfes (29) mit der Mittelachse (CL1) des Klemmittels einen spitzen Winkel bildet.

5. Ahle nach einem der Ansprüche 1 bis 4, wobei eine obere Fläche (39) des Schneideinsatzes (12) einen V-förmigen, konkaven Abschnitt hat und eine untere Fläche (35) des Schneideinsatzes mit einer Anzahl voneinander separater, im wesentlichen identischer Rippen versehen ist.

6. Ahle nach Anspruch 3, wobei der Kopf (29) eine V-förmige, konvexe Klemmfläche (30) und eine ebene Wand (31) aufweist, wobei die Klemmfläche (30) vorgesehen ist, um mit einem V-förmigen, konkaven Abschnitt einer oberen Fläche (39) des Schneideinsatzes (12) zusammenzuwirken.

7. Ahle nach einem der Ansprüche 1 bis 4, wobei der Schaft ein Gewindeende (32) hat und eine Mutter (13) mit einem Flanschabschnitt (34) mit der Gewindeendfläche (32) verbunden ist und die Feder (14) den Schaft umschließt und zwischen dem Flanschabschnitt (34) und dem Loch (26) vorgesehen ist, um den Kopf axial mit dem Schneideinsatz in Anschlag zu drücken.

## Revendications

1. Alésoir destiné à l'usinage par enlèvement de copeaux de métaux, comprenant un porte-outil allongé (11) et un certain nombre de blocs de coupe, ledit porte-outil comprenant un certain nombre de cavités (22), lesdits blocs de coupe étant disposés sensiblement le long d'une droite avec des saillies successives augmentant en partant du porte-outil, ledit alésoir (10) ayant une direction d'avance (F), ledit alésoir (10) comprenant un moyen de serrage pour chaque bloc de coupe,
**caractérisé en ce que** chaque bloc de coupe comprend une plaquette de coupe remplaçable (12) et **en ce qu'**un dispositif de serrage chargé par un ressort (15) est prévu pour coincer la plaquette de coupe contre une surface de support (21) de la cavité (22) au moyen d'un ressort (14) et **en ce que** le dispositif de serrage (15) comprend une tige allongée (28) qui est reliée à une tête en forme de coin (29), ladite tige passant au travers d'un trou (25, 26) dans le porte-outil (11), une extrémité (13) dudit dispositif de serrage (15) tournée à l'opposé de la tête (29) pouvant être poussée pour libérer la plaquette de coupe (12).

2. Alésoir selon la revendication 1, dans lequel un côté inférieur (35) de la plaquette de coupe (12) et la surface de support (21) comprennent dès surfaces profilées complémentaires.

3. Alésoir selon la revendication 1 ou 2, dans lequel la tête (29) est prévue être fermement coincée entre la plaquette de coupe (12) et une paroi (27) de la cavité pour plaquette de coupe.

4. Alésoir selon la revendication 1, 2 ou 3, dans lequel la surface de support (21) forme un angle aigu (α) avec un axe central (CL1) du moyen de serrage et dans lequel une surface de serrage (30) de la tête (29) forme un angle aigu avec l'axe central (CL1) du moyen de serrage.

5. Alésoir selon l'une quelconque des revendications 1 à 4, dans lequel une surface supérieure (39) de la plaquette de coupe (12) comprend une partie concave en forme de V et dans lequel une surface inférieure (35) de la plaquette de coupe est munie d'un certain nombre de nervures sensiblement identiques séparées les unes des autres.

6. Alésoir selon la revendication 3, dans lequel la tête (29) comprend une surface de serrage convexe en forme de V (30) et une paroi plane (31), ladite surface de serrage (30) étant prévue coopérer avec une partie concave en forme de V d'une surface supérieure (39) de la plaquette de coupe (12).

7. Alésoir selon l'une quelconque des revendications 1 à 4, dans lequel la tige comporte une extrémité filetée (32) et dans lequel un écrou (13) comprenant une partie de collerette (34) est relié à la surface de l'extrémité filetée (32) et dans lequel le ressort (14) entoure la tige et est prévu entre ladite partie de collerette (34) et le trou (26) afin de pousser axialement ladite tête jusqu'en butée avec la plaquette de coupe.
